# EUROPÄISCHE PATENTSCHRIFT

(11) **EP 1 224 094 B1**
(45) Veröffentlichungstag und Bekanntmachung des Hinweises auf die Patenterteilung: **04.01.2006**
(21) Anmeldenummer: 01969349.8
(22) Anmeldetag: 07.07.2001
(51) Int. Cl.: B60N 2/06, B60N 2/01

(54) **SITZBANK-ANORDNUNG FÜR FAHRZEUGE**
BENCH SEAT ARRANGEMENT FOR VEHICLES
SYSTEME DE BANQUETTE POUR VEHICULES

(30) Priorität: 08.07.2000 DE 20011900 U; 03.08.2000 DE 20013367 U
(43) Veröffentlichungstag der Anmeldung: 24.07.2002
(73) Patentinhaber: Johnson Controls GmbH, 51399 Burscheid (DE)
(72) Erfinder: SOMMER, Peter, 50129 Bergheim (DE); LANCIEN, Bertrand, F-91810 Vert la Grand (FR); CHOMET, Jean, Gilles, 78000 Versailles (FR); HOLLAND, Philippe, F-17200 Royan (FR); STRODA, Thorsten, 71229 Leonberg (DE); PICKSTONE, Tim, Victoria B.C. (CA); HEMMELRATH, Rudolf, 51377 Leverkusen (DE)
(74) Vertreter: Kutzenberger, Helga
(86) Internationale Anmeldenummer: PCT/EP2001/007816
(87) Internationale Veröffentlichungsnummer: WO 2002/004245

(56) Entgegenhaltungen:
- EP-A- 0 423 669
- WO-A-99/03377
- FR-A- 2 691 681
- FR-A- 2 775 637
- GB-A- 1 126 166
- JP-A- 7 108 864
- JP-A- 57 018 522
- US-A- 4 341 415

## Beschreibung

Die Erfindung betrifft eine Sitzbank-Anordnung, insbesondere eine Rücksitzbank, für Fahrzeuge, bestehend aus mindestens zwei verschieblich zu einer Bodenstruktur im Fahrzeug nebeneinander angeordneten Teilsitzen.

Derartige Sitzbank-Anordnungen sind beispielsweise aus der JP-A-07-108864 bekannt, wobei die Sitzbank in FahrzeugLängsrichtung verstellbar und/oder demontierbar sein kann. Ferner sind dabei auch Ausführungen bekannt, bei denen die Teilsitze, zumindest bezüglich ihrer Rückenlehnen, individuell verstellbar und/oder einzeln demontierbar sind.

Der vorliegenden Erfindung liegt die Aufgabe zugrunde, eine Sitzbank-Anordnung der eingangs genannten Art zu schaffen, die eine weiter verbesserte Nutzungsvariabilität innerhalb des Fahrzeugs bei gutem Sitz- und Bedienungskomfort gewährleistet.

Erfindungsgemäß wird dies durch eine Sitzbank-Anordnung gemäß Anspruch 1 erreicht. Dadurch können die beiden Teilsitze während einer Verschiebung in Fahrtrichtung gleichzeitig eine Bewegung quer zur Fahrtrichtung vollführen, wodurch die Teilsitze in einer ersten (vorderen) Grundposition quer zur Fahrtrichtung einen ersten Abstand und in einer zweiten (hinteren) Grundposition einen zweiten Abstand voneinander aufweisen können.

Dadurch wird es in einer der beiden Grundpositionen vorteilhafterweise möglich, zwischen den Teilsitzen einen weiteren Sitz, beispielsweise einen mittleren Notsitz, anzuordnen. Dieser kann schmaler als die Normalsitze (Teilsitze) ausfallen, immerhin lassen sich aber auf diese Weise mindestens drei Personen auf der erfindungsgemäßen Sitzbank-Anordnung transportieren.

In der zweiten Grundposition kann der Abstand zwischen den beiden Teilsitzen derart klein sein, daß die Möglichkeit zur Ausbildung eines Notsitzes nicht mehr gegeben ist, jedoch vorteilhafterweise den in diesem Fall mindestens zwei auf der erfindungsgemäßen Sitzbank-Anordnung beförderbaren Personen, ein höherer Sitzkomfort zuteil wird, der sich z.B. in einer größeren Bewegungsfreiheit äußert.

Der beschriebene Bewegungsablauf beim Verstellen der Sitzbank-Anordnung kann mit Vorteil dadurch erreicht werden, daß Führungsschienenpaare, die für jeden Teilsitz die jeweilige Führungsbahn bestimmen, auf der Bodenstruktur des Fahrzeugs winklig zueinander angeordnet sind, insbesondere derart, daß die rückwärtigen Enden der Führungsschienen paarweise zur Fahrzeugmittelachse hin verlaufen, d.h. entgegen der Fahrtrichtung konvergieren.

Damit sich die beiden Teilsitze immer gleichzeitig bewegen, ist erfindungsgemäß mindestens ein längenveränderliches Verbindungsmittel zwischen ihnen vorgesehen. Bevorzugt ist dafür als einfache Lösung eine Rohrverbindung, bei der ein erstes Rohrstück, das mit dem ersten Teilsitz, beispielsweise mit der Metallstruktur des Sitzkissens, verbunden ist, teleskopartig in ein zweites Rohrstück eingreift, das seinerseits (quer zur Fahrzeuglängsachse) mit der Metallstruktur des zweiten Teilsitzes verbunden ist. Dadurch ist die Abstandsänderung der beiden Teilsitze zueinander gewährleistet, ohne daß der eine Teilsitz unabhängig vom zweiten in Längsrichtung des Fahrzeugs verschoben werden könnte.

Zur Fixierung der eingestellten Positionen der Teilsitze können an sich bekannte Verriegelungsvorrichtungen eingesetzt werden, wobei insbesondere solche mit Einhandbetätigung, sowohl zum Entriegeln, als auch zum Verschieben der Rücksitzbank, zu bevorzugen sind.

Die Polsterung der Sitzbank kann bevorzugt aus einem mit einem Bezug versehenen Sitzkissenpolster und einem Rückenlehnenpolster bestehen, das ebenfalls mit einem Bezug überzogen ist. So entsteht vorteilhafterweise sowohl in der zumindest zweisitzigen als auch in der zumindest dreisitzigen Ausbildung der erfindungsgemäßen Sitzbank-Anordnung der Eindruck einer geschlossenen Sitzbank.

Die Polsterteile können zu diesem Zweck derart ausgebildet sein, daß sie in der dreisitzigen Position flach auf verschiebbaren Untergestellen der Teilsitze aufliegen.

Um den Polstern, die in der Regel aus einem mit einem textilen Polsterbezug versehenen Schaumstoffmaterial bestehen können, den nötigen Halt im Bereich des mittleren zusätzlichen Sitzes zu geben, können beispielsweise übereinander verschiebbare Platten aus Metall oder Kunststoff verwendet werden, die die Querbewegung der beiden Teilsitze mitvollführen, mit diesen also jeweils fest verbunden sind, und somit eine ständige, aber abstandsveränderliche Abstützung des Polstermaterials, sowohl des Sitzkissens als auch der Rückenlehne bilden.

Auch können die einander entsprechenden Polsterteile (für Sitzteil und Rückenlehne) der einzelnen Teilsitze jeweils einstückig ausgebildet sein, d.h derart, daß den Sitzteilen der Teilsitze und den Rückeniehnenteilen der Teilsitze jeweils ein gemeinsames Polster zugeordnet ist. Dabei ist es mit Vorteil möglich, in dem mittleren (Not)sitzbereich und an den Außenflanken der Teilsitze die Polsterung derartig auszugestalten, daß sie sich durch die Stauchung, die infolge der sich aufeinanderzu bewegenden Teilsitze auftritt, gezielt aufwölben bzw. durch die seitlich begrenzende Karosseriewand an den Außenflanken angehoben werden kann. Durch die Aufwölbungen entstehen vorteilhafterweise seitliche Körperabstützungen, die zur Erhöhung des Sitzkomforts, insbesondere bei Kurvenfahrten, beitragen. Das gezielte Aufwölben kann dabei dadurch erreicht werden, daß in den entsprechenden Übergangsbereichen die Polsterteile mit in Längsrichtung verlaufenden Ausnehmungen an ihrer Unterseite versehen sind oder daß in den Stauchzonen ein weicherer Schaumstoff verwendet wird.

Weitere vorteilhafte Ausführungen der Erfindung sind in den Unteransprüchen und der nachfolgenden speziellen Beschreibung enthalten. Anhand eines in der beiliegenden Zeichnungen dargestellten Ausführungsbeispiels wird die Erfindung näher erläutert. Dabei zeigen:
- Fig.1: eine perspektivische Darstellung des hinteren Teils eines Fahrgastraumes eines Kraftfahrzeugs mit einer erfindungsgemäßen Sitzbank-Anordnung in einer ersten Grundposition,
- Fig. 2: eine perspektivische Darstellung einer erfindungsgemäßen Sitzbank-Anordnung in der in Fig. 1 gezeigten ersten Grundposition, jedoch ohne die Darstellung der Polsterung,
- Fig. 3: in einer Fig. 1 entsprechenden Darstellung, den hinteren Teils eines Fahrgastraumes eines Kraftfahrzeugs mit einer erfindungsgemäßen Sitzbank-Anordnung in einer zweiten Grundposition,
- Fig. 4: in einer Fig. 2 entsprechenden Darstellung eine erfindungsgemäße Sitzbank-Anordnung in ihrer zweiten Grundposition,
- Fig. 5: in einer Schnittdarstellung, den mittleren Teils einer erfindungsgemäßen Sitzbank-Anordnung in einer Zwischenstellung zwischen der ersten Grundposition gemäß Fig. 1 und der zweiten Grundposition gemäß Fig. 3,
- Fig. 6 und 7: zur Veranschaulichung verschiedener Klappmöglichkeiten, in einer Fig. 2 entsprechenden Darstellung eine erfindungsgemäße Sitzbank-Anordnung in ihrer ersten Grundposition.

In den verschiedenen Figuren der Zeichnung sind dieselben Teile auch stets mit denselben Bezugszeichen versehen, so daß sie in der Regel auch jeweils nur einmal beschrieben werden.

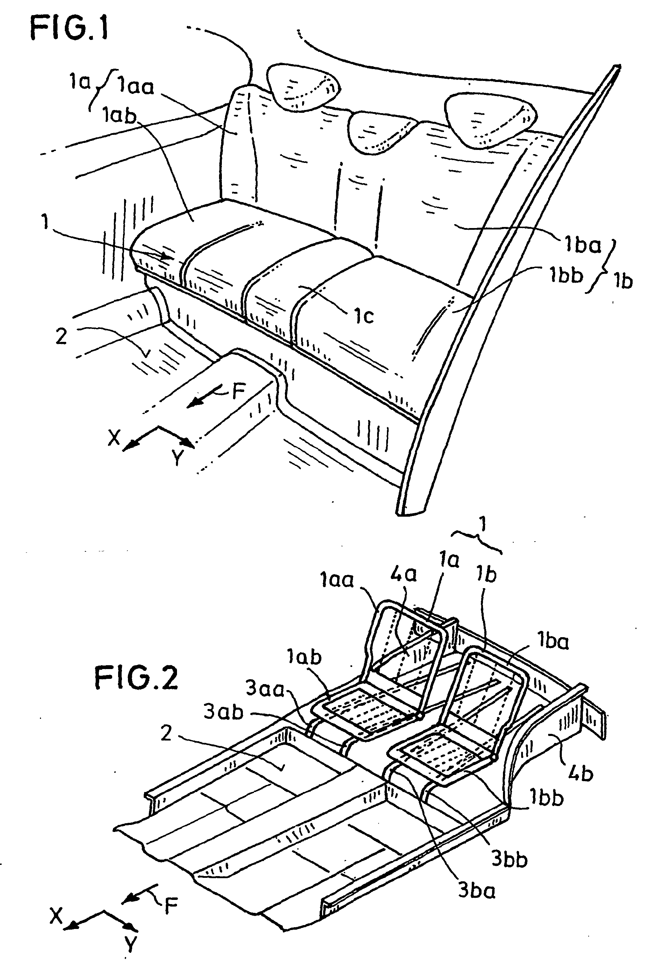

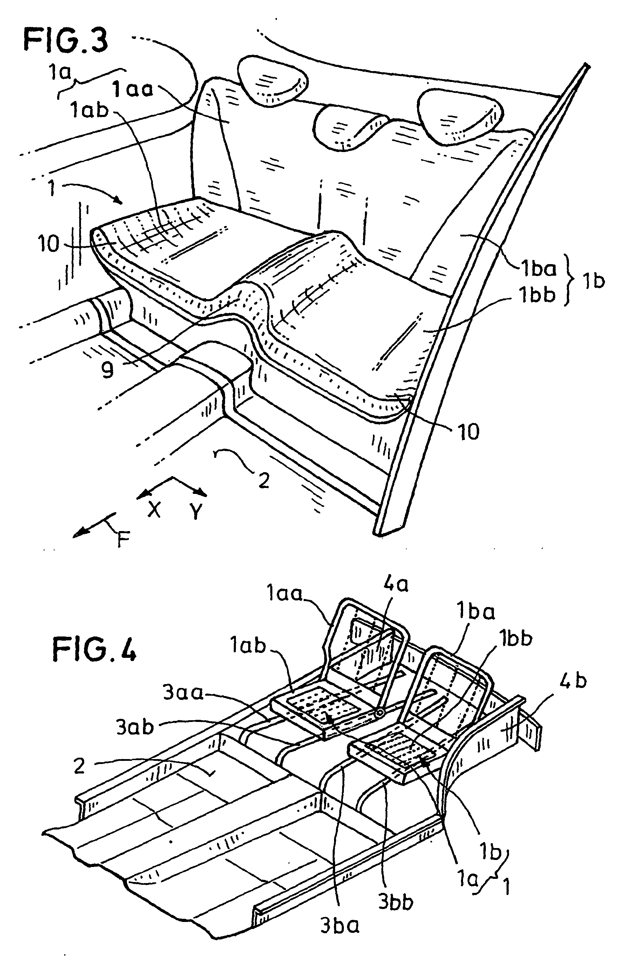

Wie zunächst Fig. 1 und 2 zeigen, in denen exemplarisch eine Rücksitzbank 1 eines Personenkraftwagens dargestellt ist, besteht eine erfindungsgemäße Sitzbank-Anordnung aus mindestens zwei verschieblich zu einer Bodenstruktur 2 im Fahrzeug nebeneinander angeordneten Teilsitzen 1 a, 1 b. Die Teilsitze 1 a, 1 b sind jeweils auf einer Führungsbahn verschieblich, die schräg zu einer in Fahrtrichtung F des Fahrzeugs verlaufenden Längsachse verläuft. Die Führungsbahnen der Teilsitze 1a, 1b sind dabei durch jeweils zwei zueinander parallel verlaufende, jedem Teilsitz 1 a, 1b paarweise zugeordnete Führungsschienen 3aa, 3ab, 3ba, 3bb festgelegt. Die Führungsbahnen der Teilsitze 1a, 1b konvergieren entgegen der Fahrtrichtung F, so daß die Teilsitze 1a, 1b in einer vorderen Grundposition (Fig. 1, 2) einen ersten Abstand und in einer hinteren Grundposition (Fig. 3, 4) einen zweiten Abstand voneinander (quer zur Fahrtrichtung F gesehen) aufweisen.

In der ersten Grundposition besteht so, wie Fig. 1 zeigt, die Möglichkeit, zwischen den beiden Teilsitzen 1a, 1b einen mittleren Notsitz 1c anzuordnen, der allerdings schmaler als die beiden Teilsitze 1a, 1b ausfällt, so daß sich dadurch drei Personen auf der Rücksitzbank, wenngleich mit mäßigem Sitzkomfort, transportieren lassen.

In der zweiten, in Fahrtrichtung F nach rückwärts verschobenen Grundposition (Fig. 3, 4) hat sich gleichzeitig mit der Verschiebung in Fahrzeuglängsrichtung (X-Richtung) der Abstand der beiden Teilsitze 1a, 1b in Fahrzeugquerrichtung (Y-Richtung) verringert. Die Möglichkeit zur Ausbildung eines Notsitzes ist somit nicht mehr gegeben. Dadurch lassen sich zwar nur zwei Personen auf der Rücksitzbank befördern, ihnen wird aber ein höherer Sitzkomfort zuteil. Die Rücksitzbank 1 kann außerdem auch so - durch ihre insgesamt schmalere Ausbildung - in der hinteren Grundposition beispielsweise, wie Fig. 4 verdeutlicht, bis in einen Karosseriebereich zurückgeschoben werden, der durch dort befindliche hintere Radkästen 4a, 4b in seiner Breite gegenüber dem übrigen Fahrgastraum verengt ist.

Wie bereits erwähnt, ist, damit sich die beiden Teilsitze 1a, 1b immer gleichzeitig bewegen, zwischen ihnen ein längenveränderliches Verbindungsmittel (in der Zeichnung nicht dargestellt) zwischen ihnen vorgesehen, das vorzugsweise durch eine teleskopierbare Rohrverbindung, gebildet sein kann.

Außerdem können, wie ebenfalls bereits erwähnt, Verriegelungsvorrichtungen, vorzugsweise solche mit Einhandbedienung, zur Arretierung der Teilsitze 1a, 1b in ihren beiden Grundpositionen auf der Führungsbahn vorgesehen sein.

Die Teilsitze 1a, 1b können, wie alle Zeichnungsfiguren zeigen, jeweils aus einem gepolsterten Sitzteil 1ab, 1bb und aus einem gepolsterten Rückenlehnenteil 1 aa, 1ba bestehen, wobei die Polsterung nur in den Fig. 1, 3 und 5 dargestellt ist.

Dabei ist es für den Eindruck einer geschlossenen Rücksitzbank 1 von Vorteil, wenn jeweils die Polster der Sitzteile und der Rückenlehneriteile der Teilsitze 1a, 1b zumindest mit einem gemeinsamen Bezug 5 überzogen sind.

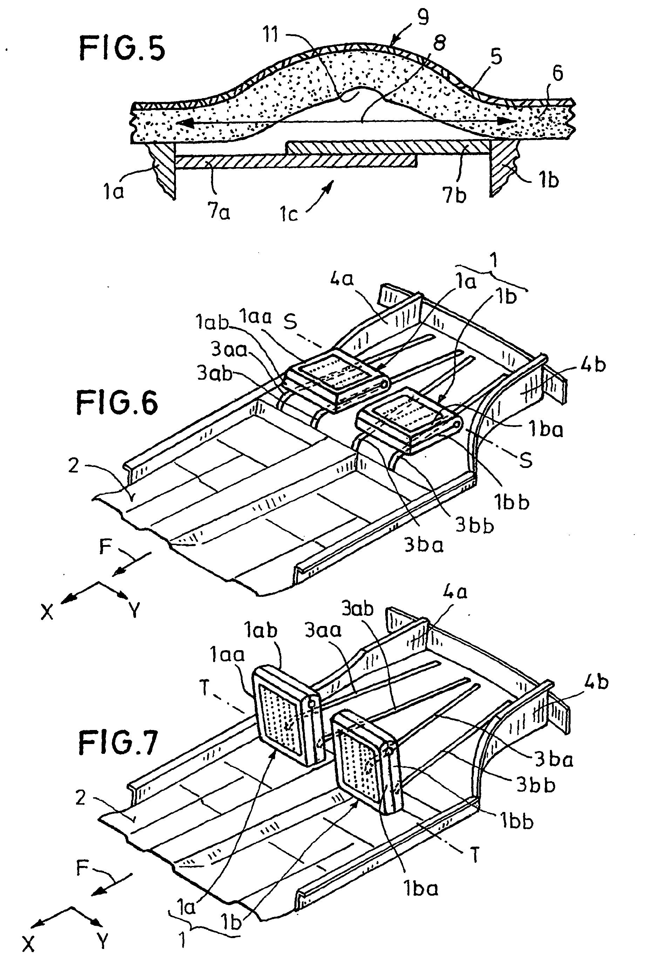

Insgesamt kann demnach die Polsterung, wie an sich bekannt, aus diesem, aus einem textilen Material bestehenden Bezug 5 und aus einem Schaumstoffmaterial 6 bestehen, wie dies Fig. 5 zu entnehmen ist.

Es ist auch möglich, daß jeweils die gesamten Polster der Sitzteile 1ab, 1bb und der Rückenlehnenteile 1aa, 1ba, der Teilsitze 1a, 1b einstückig ausgebildet sind, derart, daß den Sitzteilen 1ab, 1bb der Teilsitze 1a, 1b und den Rückenlehnenteilen 1aa, 1ba der Teilsitze 1a, 1b jeweils ein gemeinsames Polster zugeordnet ist.

Um den Polstern dann den nötigen Halt im Bereich des mittleren (Not)sitzes 1 c zu geben, können, wie ebenfalls aus Fig. 5 hervorgeht, beispielsweise übereinander verschiebbare Platten 7a, 7b aus Metall oder Kunststoff verwendet werden, die an den gegeneinander weisenden Seiten der Teilsitze 1a, 1b (Oberseite der Sitzteile 1ab, 1bb und/oder der Rückenlehnenteile 1aa, 1ba) befestigt sind und die sowohl die X- als auch die Y-Bewegung der beiden Teilsitze 1a, 1b mitvollführen. Durch diese feste Verbindung kann somit eine beständige, jedoch abstandsveränderliche Abstützung des Polstermaterials, sowohl der Sitzteile 1ab, 1bb als auch der Rückenlehnenteile 1aa, 1ba, gewährleistet werden.

Während die Polster in der dreisitzigen Position (Fig. 1) flach auf den verschiebbaren metallischen Sitzuntergestellen der Teilsitze 1a, 1b aufliegen, können sie einem Übergangsbereich B (Fig. 5) von einem Polsterabschnitt, der dem ersten Teilsitz 1a zugeordnet ist, zu einem Polsterabschnitt, der dem zweiten Teilsitz zugeordnet ist, und/oder an ihren karosserieseitigen Außenflanken derartig ausgestaltet sein, daß sie sich infolge der durch die in Y-Richtung aufeinanderzu bewegenden Teilsitze 1a, 1b entstehende Stauchung gezielt aufwölben bzw. durch die seitlich begrenzende Karosseriewand an den Außenflanken angehoben werden. Durch die mittleren Aufwölbungen 9 (Fig. 3, 5) und die seitlichen Aufwölbungen 10 (Fig. 3) in der zweisitzigen Position (Fig. 3) entstehen somit vorteilhafterweise seitliche Körperabstützungen, die zum Sitzkomfort, insbesondere bei Kurvenfahrten, beitragen.

Das gezielte Aufwölben kann dadurch erreicht werden, daß - wie in Fig. 5 dargestellt - in den entsprechenden Zonen das Schaumstoffmaterial 6 an der Unterseite mit in X-Richtung verlaufenden Ausnehmungen 11 versehen ist oder daß in den Stauchzonen ein weicheres Schaumstoffmaterial 6 verwendet wird.

Fig. 6 und 7 veranschaulichen verschiedene (an sich bekannte) Klappmöglichkeiten der erfindungsgemäßen Sitzbank-Anordung, und zwar die Möglichkeit, das jeweilige Rücklehnenteil 1aa, 1ba mindestens eines Teüsitzes 1a, 1b, vorzugsweise aller Teilsitze 1a, 1b, jeweils um eine quer zur Fahrtrichtung F verlaufende Schwenkachse S-S auf das jeweilige Sitzteil 1ba, 1bb zu klappen (Fig. 6) bzw. auch mindestens einen Teilsitz 1a, 1b vorzugsweise alle Teilsitze 1a, 1b bei auf das Sitzteil 1ab, 1bb geklapptem Rückeniehnenteil 1aa, 1ba jeweils um eine quer zur Fahrtrichtung F verlaufende Schwenkachse T-T nach oben zu klappen (Fig. 7), um dadurch eine Vergrößerung der Ladefläche bei gleichzeitiger Begrenzung des Laderaumes gegenüber dem Fahrgastraum zu erhalten.

Die Erfindung ist nicht auf das dargestellte Ausführungsbeispiel beschränkt, sondern umfaßt auch alle im Sinne der Erfindung gleichwirkenden Ausführungen. So könnten beispielsweise anstelle von zwei Teilsitzen 1a, 1b auch drei Teilsitze vorhanden sein, wodurch bei erfindungsgemäßer Ausführung der Sitzbank-Anordnung maximal zwei zusätzliche (Not)sitze zwischen den Teilsitzen angeordnet werden können. Hierbei wären drei Grundpositionen der Teilsitze möglich: ohne zusätzlichen Sitz, mit einem zusätzlichen Sitz, mit zwei zusätzlichen Sitzen.

## Patentansprüche

1. Sitzbank-Anordnung, insbesondere Rücksitzbank (1), für Fahrzeuge, bestehend aus mindestens zwei verschieblich zu einer Bodenstruktur (2) im Fahrzeug nebeneinander angeordneten Teilsitzen (1 a, 1 b), wobei die Teilsitze (1a, 1b) jeweils auf einer Führungsbahn verschieblich sind, die schräg zu einer in Fahrtrichtung (F) des Fahrzeugs verlaufenden Längsachse verläuft, **dadurch gekennzeichnet, dass** die Teilsitze (1a, 1b) über mindestens ein längenveränderliches Verbindungsmittel miteinander verbunden sind.

2. Sitzbank-Anordnung nach Anspruch 1,
**dadurch gekennzeichnet, daß** die Führungsbahnen der Teitsitze (1a, 1b) entgegen der Fahrtrichtung (F) konvergieren.

3. Sitzbank-Anordnung nach Anspruch 1 oder 2,
**dadurch gekennzeichnet, daß** die Führungsbahnen der Teilsitze (1a, 1b) durch jeweils mindestens zwei zueinander parallel verlaufende, jedem Teilsitz zugeordnete Führungsschienen, vorzugsweise durch Führungsschienenpaare (3aa, 3ab; 3ba, 3bb) festgelegt sind

4. Sitzbank-Anordnung nach Anspruch 1-3,
**dadurch gekennzeichnet, daß** das längenveränderliche Verbindungsmittel durch zwei teleskopartig ineinandergreifende Rohrstücke gebildet ist, die jeweils an einem Sitzteil befestigt sind.

5. Sitzbank-Anordnung nach einem der Ansprüche 1 bis 4,
**dadurch gekennzeichnet , daß** in mindestens einer Grundposition der Teilsitze (1a, 1b) auf ihrer Führungsbahn zwischen den Teilsitzen (1 a, 1 b) ein zusätzlicher Sitz (1c) gebildet oder angeordnet ist.

6. Sitzbank-Anordnung nach einem der Ansprüche 1 bis 5,
**dadurch gekennzeichnet, daß** die Teilsitze (1a, 1b) jeweils aus einem gepolsterten Sitzteil (1ab, 1bb) und aus einem gepolsterten Rückenlehnenteil (1aa, 1ba) bestehen.

7. Sitzbank-Anordnung nach Anspruch 6,
**dadurch gekennzeichnet, daß** jeweils die Polster (5/6) der Sitzteile (1ab, 1bb) und der Rückenlehnenteile (1aa, 1ba) der Teilsitze (1a, 1b) mit einem gemeinsamen Bezug (5) überzogen sind.

8. Sitzbank-Anordnung nach Anspruch 6 oder 7,
**dadurch gekennzeichnet, daß** die insbesondere aus Schaumstoffmaterial (6) bestehenden Polster (5/6) der Sitzteile (1ab, 1bb) und/oder der Rückeniehnentelle (1aa, 1ba) der Teilsitze (1a, 1b) jeweils einstückig ausgebildet sind, derart, daß den Teilsitzen (1a, 1b) und gegebenenfalls dem zusätzlichen Sitz (1c) jeweils mindestens ein gemeinsames Polster (5/6) zugeordnet ist

9. Sitzbank-Anordnung nach einem der Ansprüche 6 bis 8,
**dadurch gekennzeichnet, daß** insbesondere zur Ausbildung des zusätzlichen Sitzes (1c) an gegeneinander weisenden Seiten der Sitzteile (1ab, 1bb), vorzugsweise jeweils an deren Oberseite, übereinander schiebbare Plattenteile (7a, 7b) befestigt sind.

10. Sitzbank-Anordnung nach einem der Ansprüche 6 bis 9,
**dadurch gekennzeichnet, daß** insbesondere zur Ausbildung des zusätzlichen Sitzes (1c) an gegeneinander weisenden Seiten der Rückenlehnenteile (1aa, 1ba), vorzugsweise jeweils an deren Oberseite, übereinander schiebbare Plattenteile (7a, 7b) befestigt sind.

11. Sitzbank-Anordnung nach einem der Ansprüche 8 bis 10,
**dadurch gekennzeichnet, daß** in mindestens einem Übergangsbereich (8) von einem Polsterabschnitt, der einem ersten Sitzteil (1ab, 1bb) oder ersten Rückeniehnenteil (1aa, 1 ba) zugeordnet ist, zu einem Polsterabschnitt, der einem zweiten Sitzteil (1bb, 1ab) oder zweiten Rückenlehnenteil. (1ba, 1aa) zugeordnet ist, und/oder an karosserieseitigen Außenflanken-Abschnitten an der Unterseite des gemeinsamen Polsters (5/6) Ausnehmungen (11) angeordnet sind.

12. Sitzbank-Anordnung nach einem der Ansprüche 7 bis 11,
**dadurch gekennzeichnet, daß** in mindestens einem Übergangsbereich (8) von einem Polsterabschnitt, der einem ersten Sitzteil (1ab, 1bb) oder ersten Rückenlehnenteil (1aa, 1ba) zugeordnet ist, zu einem Polsterabschnitt, der einem zweiten Sitzteil (1bb, 1ab) oder zweiten Rückenlehnenteil (1ba, 1aa) zugeordnet ist, und/oder an und karosserieseitigen Außenflanken-Abschnitten das gemeinsame Polster (5/6) aus einem weicheren Schaumstoffmaterial (6) besteht als in den übrigen Polsterabschnitten.

13. Sitzbank-Anordnung nach einem der Ansprüche 1 bis 12,
**gekennzeichnet durch** mindestens eine Verriegelungsvorrichtung, vorzugsweise eine Verriegelungsvorrichtung mit Einhandbedienung, zur Arretierung der Teilsitze (1a, 1b) in jeweils mindestens zwei Positionen auf ihrer Führungsbahn.

14. Sitzbank-Anordnung nach einem der Ansprüche 6 bis 13,
**dadurch gekennzeichnet, daß** das Rücklehnenteil (1aa, 1ba) mindestens eines Tellsitzes (1a, 1b), vorzugsweise aller Teilsitze (1a, 1b), jeweils um eine quer zur Fahrtrichtung (F) verlaufende Schwenkachse (S-S) auf das Sitzteil (1ab, 1bb) des Teilsitzes (1a, 1b) klappbar ist.

15. Sitzbank-Anordnung nach einem der Ansprüche 1 bis 14,
**dadurch gekennzeichnet, daß** mindestens ein Teilsitz (1a, 1b), vorzugsweise alle Teilsitze (1a, 1b), jeweils um eine quer zur Fahrtrichtung (F) verlaufende Schwenkachse (T-T) klappbar ist.

## Claims

1. Bench seat arrangement, in particular rear bench seat (1), for vehicles, comprising at least two seat sections (1a, 1b) which are arranged next to one another in the vehicle in a manner such that they are displaceable with respect to a floor structure (2), the seat sections (1a, 1b) being displaceable in each case on a guide track which runs obliquely to a longitudinal axis running in the direction of travel (F) of the vehicle, **characterized in that** the seat sections (1a, 1b) are connected to each other via at least one length-changeable connecting means.

2. Bench seat arrangement according to Claim 1, **characterized in that** the guide tracks of the seat sections (1a, 1b) converge counter to the direction of travel (F).

3. Bench seat arrangement according to Claim 1 or 2,
**characterized in that** the guide tracks of the seat sections (1a, 1b) are defined by in each case at least two guide rails, which run parallel to each other and are assigned to each seat section, preferably by pairs of guide rails (3aa, 3ab; 3ba, 3bb).

4. Bench seat arrangement according to Claims 1-3, **characterized in that** the length-changeable connecting means is formed by two tube segments which engage telescopically in one another and are in each case fastened to a seat part.

5. Bench seat arrangement according to one of Claims 1 to 4, **characterized in that**, in at least one basic position of the seat sections (1a, 1b) on their guide track, an addition a seat (1c) is formed or arranged between the seat sections (1a, 1b).

6. Bench seat arrangement according to one of Claims 1 to 5, **characterized in that** the seat sections (1a, 1b) in each case comprise an upholstered seat part (1ab, 1bb) and an upholstered backrest part (1aa, 1ba).

7. Bench seat arrangement according to Claim 6, **characterized in that** the upholsteries (5/6) of the seat parts (1ab, 1bb) and of the backrest parts (1aa, 1ba) of the seat sections (1a, 1b) are in each case covered with a common covering (5).

8. Bench seat arrangement according to Claim 6 or 7,
**characterized in that** the upholsteries (5/6) of the seat parts (1ab, 1bb) and/or of the backrest parts (1aa, 1ba) of the seat sections (1a, 1b), which upholsteries are composed in particular of foam material (6), are in each case of single-piece design such that in each case at least one common upholstery (5/6) is assigned to the seat sections (1a, 1b) and, if appropriate, to the additional seat (1c).

9. Bench seat arrangement according to one of Claims 6 to 8, **characterized in that**, in particular in order to form the additional seat (1c), panel parts (7a, 7b) which are slideable one above the other are fastened on mutually facing sides of the seat parts (1ab, 1bb), preferably in each case on the upper side thereof.

10. Bench seat arrangement according to one of Claims 6 to 9, **characterized in that**, in particular in order to form the additional seat (1c), panel parts (7a, 7b) which are slideable one above the other are fastened on mutually facing sides of the backrest parts (1aa, 1ba), preferably in each case on the upper side thereof.

11. Bench seat arrangement according to one of Claims 8 to 10, **characterized in that** recesses (11) are arranged in at least one transition region (8) from an upholstery section, which is assigned to a first seat part (1ab, 1bb) or first backrest part (1aa, 1ba), to an upholstery section, which is assigned to a second seat part (1bb, 1ab) or second backrest part (1ba, 1aa), and/or on body-side outer flank sections on the lower side of the common upholstery (5/6).

12. Bench seat arrangement according to one of Claims 7 to 11, **characterized in that** in at least one transition region (8) from an upholstery section, which is assigned to a first seat part (1ab, 1bb) or first backrest part (1aa, 1ba), to an upholstery section, which is assigned to a second seat part (1bb, 1ab) or second backrest part (1ba, 1aa), and/or on body-side outer flank sections, the common upholstery (5/6) is composed of a softer foam material (6) than the other upholstery sections.

13. Bench seat arrangement according to one of Claims 1 to 12, **characterized by** at least one locking device, preferably a locking device with one-hand operation, for locking the seat sections (1a, 1b) in at least two positions in each case on their track.

14. Bench seat arrangement according to one of Claims 6 to 13, **characterized in that** the backrest part (1aa, 1ba) of at least one seat section (1a, 1b), preferably of all of the seat sections (1a, 1b), can be folded in each case about a pivot axis (S-S) running transversely to the direction of travel (F) onto the seat part (1ab, 1bb) of the seat section (1a, 1b).

15. Bench seat arrangement according to one of Claims 1 to 14, **characterized in that** at least one seat section (1a, 1b), preferably all of the seat sections (1a, 1b), can be folded in each case about a pivot axis (T-T) running transversely to the direction of travel (F).

## Revendications

1. Système de banquette, notamment banquette arrière (1) pour véhicules, se composant d'au moins deux sièges partiels (1a, 1b) disposés l'un à côté de l'autre dans le véhicule de manière déplaçable pour former une structure de sol (2), les sièges partiels (1a, 1b) pouvant être déplacés chacun sur une piste de guidage qui s'étend obliquement vers un axe longitudinal s'étendant dans une direction de conduite (F) du véhicule, **caractérisé en ce que** les sièges partiels (1a, 1b) sont connectés l'un à l'autre par au moins un moyen de connexion de longueur variable.

2. Système de banquette selon la revendication 1,
**caractérisé en ce que** les pistes de guidage des sièges partiels (1a, 1b) convergent dans le sens opposé à la direction de conduite (F).

3. Système de banquette selon la revendication 1 ou 2, **caractérisé en ce que** les pistes de guidage des sièges partiels (1a, 1b) sont définies par au moins deux rails de guidage respectifs s'étendant parallèlement l'un à l'autre, associés à chaque siège partiel, de préférence par des paires de rails de guidage (3aa, 3ab ; 3ba, 3bb).

4. Système de banquette selon les revendications 1 à 3, **caractérisé en ce que** le moyen de connexion de longueur variable est formé par deux pièces tubulaires venant en prise l'une dans l'autre de manière télescopique, qui sont fixées à chaque fois sur une partie de siège.

5. Système de banquette selon l'une quelconque des revendications 1 à 4, **caractérisé en ce que** dans au moins une position de base des sièges partiels (1a, 1b), sur leur piste de guidage entre les sièges partiels (1a, 1b), est formé ou disposé un siège supplémentaire (1c).

6. Système de banquette selon l'une quelconque des revendications 1 à 5, **caractérisé en ce que** les sièges partiels (1a, 1b) se composent à chaque fois d'une partie de siège rembourrée (1ab, 1bb) et d'une partie de dossier rembourrée (1aa, 1ba).

7. Système de banquette selon la revendication 6, **caractérisé en ce qu'**à chaque fois le rembourrage (5/6) des parties de siège (1ab, 1bb) et des parties de dossier (1aa, 1ba) des sièges partiels (1a, 1b) est recouvert d'un revêtement commun (5).

8. Système de banquette selon la revendication 6 ou 7,
**caractérisé en ce que** les rembourrages (5/6) des parties de siège (1ab, 1bb) et/ou des parties de dossier (1aa, 1ba) des sièges partiels (1a, 1b), se composant notamment de matériau en mousse (6), sont réalisés à chaque fois d'une seule pièce de telle sorte qu'au moins un rembourrage commun (5/6) soit associé à chaque fois aux sièges partiels (1a, 1b) et éventuellement au siège supplémentaire (1c).

9. Système de banquette selon l'une quelconque des revendications 6 à 8, **caractérisé en ce que** notamment pour la réalisation du siège supplémentaire (1c), des parties de plaque (7a, 7b) pouvant être poussées l'une sur l'autre, sont fixées sur des côtés tournés l'un vers l'autre des parties de siège (1ab, 1bb), de préférence à chaque fois au niveau de leur côté supérieur.

10. Système de banquette selon l'une quelconque des revendications 6 à 9, **caractérisé en ce que** notamment pour la réalisation du siège supplémentaire (1c), des parties de plaques (7a, 7b) pouvant être poussées l'une sur l'autre, sont fixées sur des côtés tournés l'un vers l'autre des parties de dossier (1aa, 1ba), de préférence à chaque fois au niveau de leur côté supérieur.

11. Système de banquette selon l'une quelconque des revendications 8 à 10, **caractérisé en ce que** dans au moins une région de transition (8) d'une portion de rembourrage qui est associée à une première partie de siège (1ab, 1bb) ou à une première partie de dossier (1aa, 1ba), à une portion de rembourrage qui est associée à une deuxième partie de siège (1bb, 1ab) ou à une deuxième partie de dossier (1ba, 1aa), et/ou sur des portions de flancs extérieurs du côté de la carrosserie au niveau du côté inférieur du rembourrage commun (5/6), sont prévus des évidements (11).

12. Système de banquette selon l'une quelconque des revendications 7 à 11, **caractérisé en ce que** dans au moins une région de transition (8) d'une portion de rembourrage qui est associée à une première partie de siège (1ab, 1bb) ou une première partie de dossier (1aa, 1ba), à une portion de rembourrage qui est associée à une deuxième partie de siège (1bb, 1ab) ou une deuxième partie de dossier (1ba, 1aa), et/ou sur des portions de flancs extérieurs du côté de la carrosserie, le rembourrage commun (5/6) se compose d'un matériau en mousse (6) plus mou que dans les autres portions de rembourrage.

13. Système de banquette selon l'une quelconque des revendications 1 à 12, **caractérisé par** au moins un dispositif de verrouillage, de préférence un dispositif de verrouillage avec une commande à une seule main, pour le blocage des sièges partiels (1a, 1b) dans au moins deux positions respectives sur leur piste de guidage.

14. Système de banquette selon l'une quelconque des revendications 6 à 13, **caractérisé en ce que** la partie de dossier (1aa, 1ba) d'au moins un siège partiel (1a, 1b), de préférence de tous les sièges partiels (1a, 1b), est rabattable à chaque fois autour d'un axe de pivotement (S-S) s'étendant transversalement à la direction de conduite (F) sur la partie de siège (1ab, 1bb) du siège partiel (1a, 1b).

15. Système de banquette selon l'une quelconque des revendications 1 à 4, **caractérisé en ce qu'**au moins un siège partiel (1a, 1b), de préférence tous les sièges partiels (1a, 1b), est/sont rabattable(s) à chaque fois autour d'un axe de pivotement (T-T) s'étendant transversalement à la direction de conduite (F).
